(19) Europäisches Patentamt
European Patent Office
Office européen des brevets

(11) EP 1 059 506 A2

(12) EUROPÄISCHE PATENTANMELDUNG

(43) Veröffentlichungstag:
13.12.2000 Patentblatt 2000/50

(51) Int. Cl.$^{7}$: G01B 7/00

(21) Anmeldenummer: 00111675.5

(22) Anmeldetag: 31.05.2000

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 11.06.1999 DE 19926738

(71) Anmelder: Ruf Electronics GmbH
85635 Höhenkirchen (DE)

(72) Erfinder:
Schödlbauer, Dieter, Dr.
81825 München (DE)

(74) Vertreter: von Bülow, Tam, Dr.
Patentanwalt
Mailänder Strasse 13
81545 München (DE)

(54) **Magnet für Wegaufnehmer**

(57) Der Wegaufnehmer (1) hat zwei in Verschieberichtung eines Permanent-Magneten (5) hintereinander angeordnete Paare von Flußleitstücken (2, 3), die einen Primärluftspalt (4), in denen der Magnet linear verschieblich ist, und einen Arbeitsluftspalt (6) bilden, in dem eine Hallsonde (7) angeordnet ist. Zum Eliminieren des Einflusses von Fremdmagnetfeldern in axialer Richtung ist die Hallsonde (7) im Arbeitsluftspalt (6) so angeordnet, daß ihre Meßempfindlichkeitsrichtung senkrecht zur Verschieberichtung des Magneten (5) steht.

Fig. 1

EP 1 059 506 A2

**Beschreibung**

Die Erfindung bezieht sich auf einen Wegaufnehmer gemäß dem Oberbegriff des Patentanspruches 1. Ein derartiger Wegaufnehmer ist aus der US 5,532,585 bekannt. Dort wird ein Permanent-Magnet in einem Primärluftspalt zwischen ferromagnetischen Flußleitstücken linear verschoben. Senkrecht zu dem Primärluftspalt ist zwischen zwei Flußleitstücken ein Arbeitsluftspalt vorhanden, der einen Magnetfeldsensor in Form einer Hall-Sonde aufweist, deren Empfindlichkeitsrichtung parallel zu Verschieberichtung des Magneten liegt.

Bei der Anwendung von Schiebewegaufnehmern mit Halleffekt-Sonden ist zu beachten, daß der störende Einfluß von fremden Magnetfeldern vermieden wird, um das Meßergebnis nicht zu verfälschen. Dies kann z.B. durch geeignete Abschirmmaßnahmen erfolgen. Soll der Wegaufnehmer jedoch mit einem elektromagnetischen Stellglied zu einer kompakten Einheit verbunden werden, so sind Abschirmmaßnahmen oft nicht ausreichend oder sehr aufwendig.

Eine solche Situation liegt beispielsweise dann vor, wenn der Wegaufnehmer zusammen mit einem Hubmagneten verwendet wird. Ein Beispiel hierfür ist die Regelung eines Ventils in einem Abgasrückführungssystem einer Verbrennungskraftmaschine. Der Hubmagnet kann dabei ein axiales Störfeld erzeugen, welches insbesondere entlang der Symmetrieachse merkliche Werte annehmen kann. Bei dem eingangs genannten Wegaufnehmer kann ein solches axiales Störfeld auf den Halleffekt-Sensor einwirken und somit das Meßergebnis unzulässig verfälschen.

Aufgabe der Erfindung ist es, den Wegaufnehmer der eingangs genannten Art dahingehend zu verbessern, daß er weitestgehend unempfindlich gegenüber magnetischen Störfeldern ist und insbesondere solchen, die koaxial zur Verschieberichtung wirken.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt darin, den Magnetfeldsensor so anzuordnen, daß seine Meßempfindlichkeitsrichtung senkrecht zur Verschieberichtung des Permanent-Magneten steht. Der Einfluß axialer Störmagnetfelder ist somit weitgehend eliminiert.

Nach einer Weiterbildung der Erfindung sind die Flußleitstücke symmetrisch zum Primär- und zum Arbeitsluftspalt ausgebildet. Vorzugsweise liegen der Primär- und der Arbeitsluftspalt in einer Ebene. Vorzugsweise ist die wirksame Fläche des Arbeitsluftspaltes kleiner als die wirksame Fläche des Primärluftspaltes, wodurch sich die genutzte magnetische Flußdichte im Arbeitsspalt erhöhen läßt.

Nach einer Weiterbildung der Erfindung sind zwei gleiche Paare von Flußleitstücken in Verschieberichtung hintereinander angeordnet. Je ein Paar von Flußleitstücken bildet einen Magnetkreis. Die beiden so gebildeten Magnetkreise sind durch einen Koppelspalt magnetisch gekoppelt. Vorzugsweise ist in jedem Magnetkreis ein Magnetfeldsensor angeordnet, der vorzugsweise ein Halleffekt-Sensor ist. Befindet sich der Magnet im wesentlichen vollständig im Arbeitsluftspalt des ersten Flußleitstückpaares, so ist in dieser Position die magnetische Flußdichte im Arbeitsspalt dieses Flußleitstückpaares maximal, die im Arbeitsspalt des anderen Flußleitstückpaares minimal. Ursache für die Anwesenheit einer von Null verschiedenen Flußdichte im zweiten Arbeitsspalt ist die erwähnte magnetische Kopplung der beiden Magnetkreise über den Koppelspalt. Wird nun der Magnet sukzessive aus dem Primärluftspalt des ersten Flußleitstückpaares in den des zweiten eingeschoben, so erhöht sich die Flußdichte im zweiten Arbeitsspalt, während sie im ersten Arbeitsspalt abnimmt. Durch Dimensionierung der geometrischen Abmessungen läßt sich ein weitestgehend linearer Verlauf der Hallspannungen als Funktion des Schiebeweges erreichen.

Im folgenden wird die Erfindung anhand eines Ausführungsbeispieles im Zusammenhang mit der Zeichnung ausführlicher erläutert. Es zeigt:

Fig. 1      einen schematischen Querschnitt eines Wegaufnehmers nach der Erfindung;

Fig. 2      eine schematische Draufsicht des Wegaufnehmers der Fig. 1;

Fig. 3      eine perspektivische Ansicht eines Flußleitstückes der Fig. 1 und 2;

Fig. 4      eine Draufsicht eines Magnethalters sowie zwei Ansichten eines Stößels, an dem der Magnethalter befestigt ist;

Fig. 5a      eine Draufsicht auf eine Gehäusehälfte des Wegaufnehmers nach einem Ausführungsbeispiel der Erfindung;

Fig. 5b      eine Stirnansicht des Gehäuses; und

Fig. 5c      eine perspektivische Ansicht einer Gehäusehälfte;

Fig. 6      eine perspektivische Ansicht eines geöffneten Wegaufnehmers nach der Erfindung.

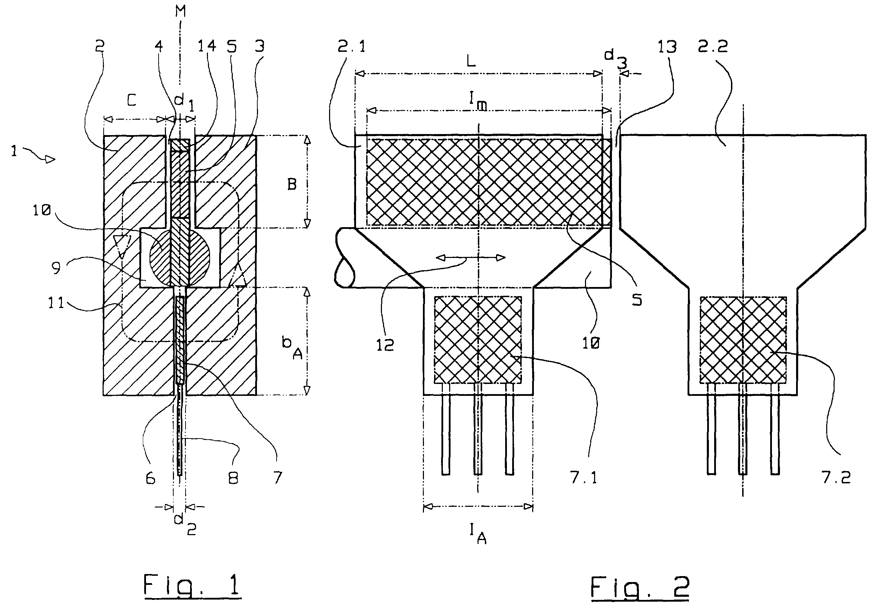

Der Wegaufnehmer 1 der Fig. 1 zeigt zwei Flußleitstücke 2 und 3 aus ferromagnetischem Material, wie z.B. einer FeNi-Legierung oder aus Reineisen, die beispielsweise in Sintertechnik gefertigt sind. Die beiden Flußleitstücke 2 und 3 sind spiegelsymmetrisch zu einer Mittelebene M ausgebildet und bilden einen Primärluftspalt 4 mit der Breite $d_1$, in welchem ein Permanent-Magnet 5 linear verschieblich ist, sowie einen Arbeitsluftspalt 6 mit der Breite $d_2$, in welchem eine Hall-Sonde 7 angeordnet ist, deren Anschlußbeinchen 8 über die Kontur der Flußleitstücke 2 und 3 herausstehen. Im dargestellten Ausführungsbeispiel ist die Breite $d_1$ des Primärluftspaltes 4 größer als die Breite $d_2$ des

Arbeitsluftspaltes 6. Im Bereich des Primärluftspaltes 4 haben die Flußleitstücke 2 und 3 eine Dicke C. Die Höhe des Arbeitsluftspaltes 4 ist mit B bezeichnet. Die Höhe des Arbeitsluftspaltes 6 ist mit $b_A$ bezeichnet. Im Mittelbereich haben beide Flußleitstücke 2 und 3 eine Ausnehmung 9, in welcher ein Stößel 10 geführt ist, an welchem der Magnet 5 befestigt und mit diesem zusammen verschieblich ist.

Der Magnet 5 ist durch seine Dicke magnetisiert, die gleichzeitig seine Kante mit der kleinsten Länge ist. Damit ergibt sich ein Magnetfluß über den Primärluftspalt 4, das Flußleitstück 2, den Arbeitsluftspalt 6, durch die Hall-Sonde 7 hindurch und das Flußleitstück 3, wie schematisch durch die Feldlinie 11 angedeutet. Die Hauptempfindlichkeitsrichtung der Hall-Sonde 7 liegt damit senkrecht zur Mittelebene M und senkrecht zur Achse des Stößels 10. Der Magnetfluß des Magneten 5 durchläuft die Hall-Sonde 7 somit in deren Hauptempfindlichkeitsrichtung. Axiale Störfelder, die koaxial zur Achse des Stößels 10 verlaufen, werden dagegen von der Hall-Sonde 7 nicht erfaßt.

Fig. 2 zeigt eine Draufsicht des Wegaufnehmers, der zwei in Verschieberichtung (Pfeil 12) hintereinander angeordnete Paare von Flußleitstücken und damit zwei Magnetkreise aufweist, von denen je ein Flußleitstück 2.1 und 2.2 zu sehen ist. Die beiden Flußleitstücke eines Paares sind über einen Koppelspalt 13 mit der Breite $d_3$ magnetisch gekoppelt. Jeder Magnetkreis hat hier eine Hall-Sonde 7.1 bzw. 7.2. Es ist aber auch möglich, nur einem Magnetkreis ein Hall-Sonde zuzuordnen. Auch können die Paare von Flußleitstücken der einzelnen Magnetkreise unterschiedlich ausgebildet sein.

Die Länge eines Flußleitstückes 2.1 bzw. 2.3 in Verschieberichtung 12 ist mit L gekennzeichnet. Die Länge $I_m$ des Magneten 5 in Verschieberichtung 12 ist größer/gleich der Länge $X_0$ des maximalen Verschiebeweges plus der Breite $d_3$ des Koppelspaltes. Für die Länge L der Flußleitstücke gilt ebenfalls $L \geq X_0 + d_3$, so daß die gesamte Baulänge der Flußleitstückpaare in der Praxis etwas mehr als $2X_0 + 3d_3$ beträgt.

Die Querschnittsfläche $F_1$ des Primärluftspaltes 4 beträgt L x B. Die Querschnittsfläche $F_2$ des Arbeitsluftspaltes 6 ist $b_A$ x $I_A$. $F_2$ ist kleiner als $F_1$ wodurch die genutzte magnetische Flußdichte im Arbeitsspalt erhöht ist. Im dargestellten Ausführungsbeispiel ist $I_A$ kleiner als L. Mit B größer/gleich $b_A$ ist damit die Querschnittsfläche des Arbeitsspaltes kleiner als die des Primärluftspaltes.

In der in Fig. 2 gezeigten Grenzstellung des Magneten 5 ist die Flußdichte im Arbeitsspalt des Flußleitstückes 2.1 maximal, die im Arbeitsspalt des Flußleitstückes 2.2 minimal. Aufgrund der Kopplung über den Koppelspalt 13 ist auch im Arbeitsspalt des Flußleitstückes 2.2 eine von Null verschiedene Flußdichte vorhanden, so daß auch in dieser Stellung die Hall-Sonde 7.2 ein (minimales) Meßsignal abgibt.

Wird der Magnet 5 sukzessive aus dem Primärluftspalt des ersten Flußleitstückpaares (2.1) in den des zweiten Flußleitstückpaares (2.2) verschoben, so erhöht sich die Flußdichte im zweiten Arbeitsspalt, während sie im ersten Arbeitsspalt abnimmt. In beiden Hall-Sonden erhält man ein im wesentlichen lineares Signal in Abhängigkeit von der Position des Magneten 5 und damit des mit ihm verbundenen Stößels 10. Aufgrund des Koppelspaltes 13 wird dieses Signal zwar auch in den Grenzstellungen nicht exakt bei Null liegen. Durch eine entsprechende Korrektur in einer Auswerteschaltung läßt sich die Ausgangskennlinie auf jeden gewünschten Spannungsbereich transformieren und beispielsweise in einer der Grenzstellungen auch ein Nulldurchgang der Ausgangskennlinie erreichen.

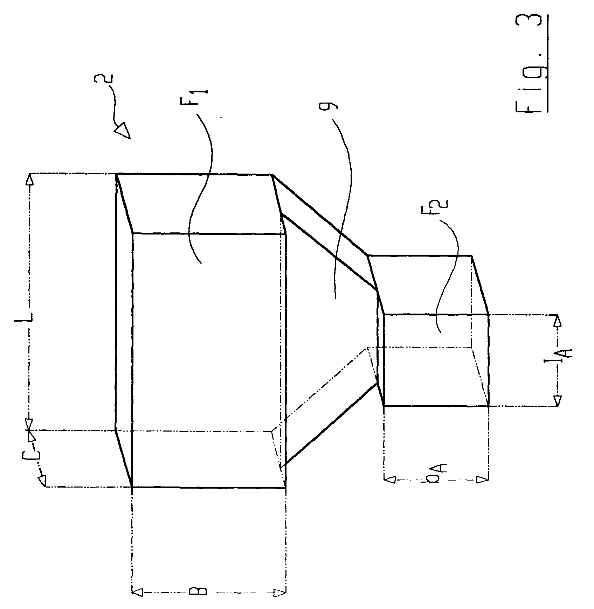

Fig. 3 zeigt eine perspektivische Ansicht eines Flußleitstückes 2 mit der Fläche $F_1$ für den Primärluftspalt und der demgegenüber kleineren Fläche $F_2$ für den Arbeitsluftspalt. Das Flußleitstück in dieser Darstellung ist im Bereich dieser Flächen $F_1$ und $F_2$ quaderförmig, wobei selbstverstänlich auch andere Formen möglich sind. Im Übergangsbereich zwischen diesen Quadern befindet sich die Ausnehmung 9 für die Führung des Stößels 10 (Fig. 2).

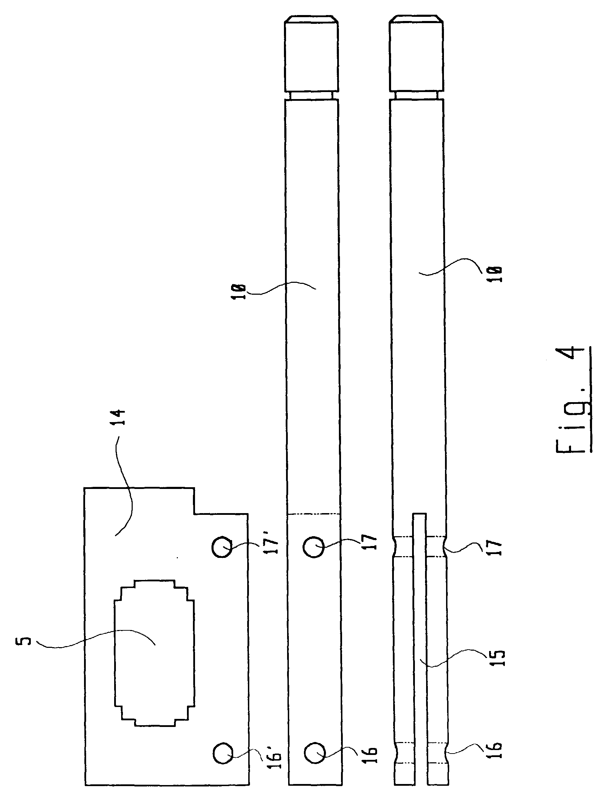

Fig. 4 zeigt den Stößel 10 in zwei verschiedenen, je um 90° gedrehten Seitenansichten sowie einen Magnethalter 14 mit einer Aussparung 5' für den Magneten 5. Der Stößel 10 hat im Bereich seines einen Endes eine Ausnehmung 15 entsprechend der Dicke des Magnethalters 14 sowie zwei Bohrungen 16 und 17 zur Befestigung des Magnethalters 14, der entsprechende Bohrungen 16' und 17' hat, wobei die Befestigung beispielsweise mittels eines Nietes oder einer Schraubverbindung hergestellt werden kann. Der Magnethalter 14 und der Magnet 5 stehen seitlich über den Stößel 10 hinaus. Der Stößel 10 und der Magnethalter 14 können auch als eine Einheit hergestellt sein, beispielsweise in Spritzgußtechnik.

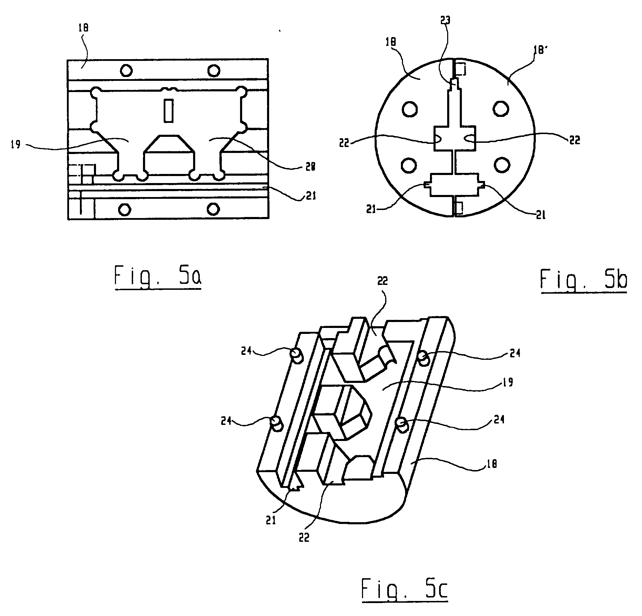

Fig. 5 zeigt ein Gehäuse zur Aufnahme der Flußleitstücke und zur Führung des Stößels und des Magneten. Das Gehäuse besteht aus zwei Halbschalen 18 und 18' aus Kunststoff. Die beiden Halteschalen sind im wesentlichen spiegelsymmetrisch und haben je zwei Ausnehmungen 19 und 20 entsprechend der Außenkontur der Flußleitstücke. Beide Halbschalen haben eine in Axialrichtung verlaufende Nut 21 zur Aufnahme einer Leiterbahnplatte, von der die beiden Hallsonden 7.1 und 7.2 abstehen und in den jeweiligen Arbeitsspalt hineinragen. Weiter haben beide Halbschalen eine axial verlaufende Ausnehmung 22, in der der Stößel 10 verschieblich ist. Eine weitere Ausnehmung 23 mit etwas verengtem Querschnitt (Fig. 5c) dient der Führung des Magnethalters 14, der damit nur an den Wänden dieser Ausnehmung 23 aus Kunststoff gleitet und nicht mechanisch an den Flußleitstücken reibt. Eine Gehäusehälfte 18 hat im Bereich ihres Randes vier vorstehende Zapfen 24, die in entsprechende Ausnehmungen der anderen Gehäusehälfte 18' hineinragen, wodurch auch die beiden Gehäusehälften zueinander zentriert werden.

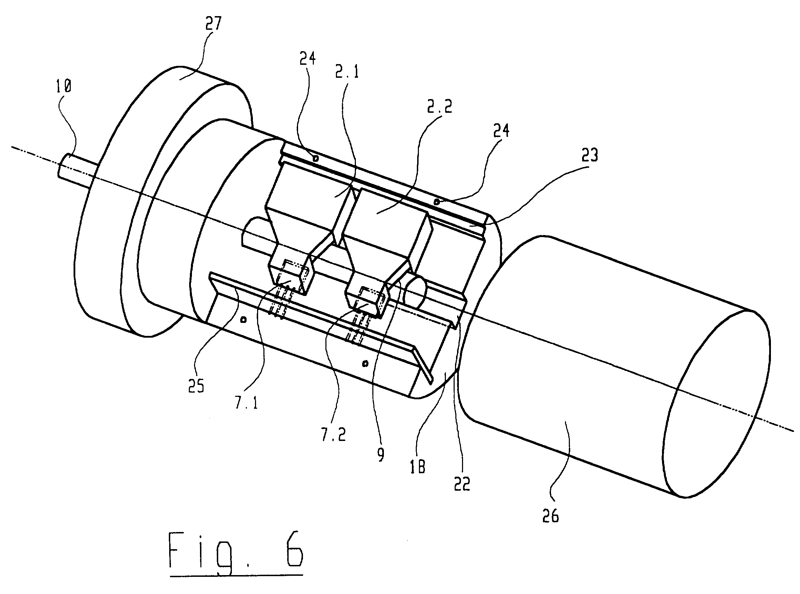

Fig. 6 zeigt eine perspektivische Ansicht eines praktischen Ausführungsbeispieles für den Wegaufnehmer der oben beschriebenen Art, wobei eine Gehäusehälfte noch fortgelassen ist. Man erkennt die untere Gehäusehälfte 18 sowie die oberen Flußleitstücke 2.1 und 2.2. Auch ist zu sehen, wie die Leiterbahnplatte 25 mit den Hallsonden 7.1 und 7.2 in die eine Gehäusehälfte eingesetzt ist. Das Gehäuse ist an einen Flansch 27 angebracht, aus dem der Stößel 10 herausragt. Im konkreten Ausführungsbeispiel eines Wegaufnehmers für ein Ventil in einem Abgasrückführsystem ist dieser Stößel 10 mit dem Ventil verbunden. Das gesamte Gehäuse wird durch einen becherartigen Deckel 26 aus metallischem Material und insbesondere aus ferromagnetischem Material eingesetzt, so daß neben dem mechanischen Schutz auch noch eine zusätzliche Abschirmung gegen anderweitige elektromagnetische Störfelder gegeben ist.

Die Gehäuseteile können kostengünstig in Kunststoff-Spritzgußtechnik hergestellt werden. Ebenso können der Stößel und der Magnethalter als ein integriertes Element in Spritzgußtechnik hergestellt sein Die Leiterplatte 25 kann neben den Hallsonden 7.1 und 7.2 auch noch weitere elektronische Komponenten tragen. Der Stößel ist aus nicht-magnetischem Material, so daß er selbst den magnetischen Fluß nicht leitet.

**Patentansprüche**

1. Wegaufnehmer mit einem Permanent-Magneten (5), der in einem Primärluftspalt (4) zwischen ferromagnetischen Flußleitstücken (2, 3) linear verschieblich ist und mit einem Magnetfeldsensor, der in einem Arbeitsluftspalt (6) zwischen den Flußleitstücken angeordnet ist, dadurch gekennzeichnet, daß der Magnetfeldsensor (7; 7.1, 7.2) und der Arbeitsluftspalt (6) so angeordnet sind, daß die Meßempfindlichkeitsrichtung des Magnetfeldsensors senkrecht zur Verschieberichtung (12) des Magneten (5) steht.

2. Wegaufnehmer nach Anspruch 1, dadurch gekennzeichnet, daß die Flußleitstücke (2, 3) symmetrisch zu einer Mittelebene (M) ausgebildet sind.

3. Wegaufnehmer nach Anspruch 2, dadurch gekennzeichnet, daß der Primärluftspalt (4) und der Arbeitsluftspalt (6) symmetrisch zu der Mittelebene (M) liegen.

4. Wegaufnehmer nach einem der Ansprüche 1 bis 3, dadurch gekennzeichnet, daß die wirksame Fläche ($F_2$) des Arbeitsluftspaltes (6) kleiner als die wirksame Fläche ($F_1$) des Primärluftspaltes (4) ist.

5. Wegaufnehmer nach einem der Ansprüche 1 bis 4, dadurch gekennzeichnet, daß zwei Paare von Flußleitstücken (2.1, 2.2) in Verschieberichtung (12) des Magneten (5) hintereinander angeordnet sind und durch einen Koppelspalt (13) voneinander getrennt sind.

6. Wegaufnehmer nach Anspruch 5, dadurch gekennzeichnet, daß in jedem Arbeitsluftspalt beider Paare von Flußleitstücken je eine Hallsonde (7.1, 7.2) angeordnet ist.

Fig. 2

Fig. 1

Fig. 3

Fig. 4

Fig. 5b

Fig. 5a

Fig. 5c

Fig. 6